# EUROPEAN PATENT APPLICATION

(11) **EP 0 850 997 A2**
(43) Date of publication of application: **01.07.1998**
(21) Application number: 97122481.1
(22) Date of filing: 19.12.1997
(51) Int. Cl.: C08L 83/04, C08K 7/00, C08K 3/34, C08K 5/54

(54) **Filled addition curable compositions having reduced gassing and increased shelf stability**

(30) Priority: 24.12.1996 US 773745; 03.12.1997 US
(71) Applicant: DOW CORNING CORPORATION, Midland Michigan 48686-0994 (US)
(72) Inventor: Kalinowski, Robert Edward, Auburn, Michigan 48611 (US); Tomalia, Mary Kay, Midland, Michigan 48640 (US)
(74) Representative: Patentanwälte Sternagel & Fleischer

(57) **Abstract**

This invention relates to the preparation of an addition curable composition having reduced gassing and increased shelf stability. The addition curable composition comprises an organic polymer having on average at least 1.4 alkenyl groups per molecule, a crosslinker having on average at least 1.4 hydrosilyl groups per molecule, a platinum group metal-containing catalyst, a molecular sieve dessicant and a filler.

## Description

This invention relates to filled addition curable compositions comprising alkenyl functional organic polymers and hydrosilyl functional crosslinkers having reduced gassing and increased shelf stability.

Saam and Macosko, Polym. Prepr., 26 (2) 48-9 (1985) describe a platinum catalyzed addition reaction between a terminally unsaturated polyisobutylene (PIB) polymer and bifunctional HMe₂SiOMe₂SiOSiMe₂H such that a copolymer forms or a tetrafunctional Si(OSiMe₂H)₄ which crosslinks the PIB polymer into an elastomer, in each case where Me is a methyl group.

Japanese Patent Application Kokai 2-75644 describes a curable resin composition comprising (A) a saturated hydrocarbon polymer containing at least one alkenyl group per molecule, (B) a polyorganohydrogen siloxane containing at least two hydrogen atoms bonded to silicon atoms per molecule, and (C) a platinum catalyst.

U.S. Patent No. 5,409,995 describes a curable composition comprising (C) an organic curing agent having at least two hydrosilyl groups per molecule, prepared as described therein, (D) an organic polymer having at least one alkenyl group per molecule, and (E) a hydrosilyation catalyst.

Silicone compounds are known for their weather resistance, water resistance and thermal stability, however they tend to be more expensive than their organic counterparts which don't have as good a property profile. Silicon modified organic materials may provide another option. For example, addition curable compositions which utilize a Si-H containing compound to crosslink an organic polymer having alkenyl groups are useful when cured as seal ants, adhesives, coatings, molding and potting compounds, gels and additives.

One of the problems, however which arises when Si-H compounds are added to a system is that moisture will react with the Si-H. Therefore, if an addition curable composition containing an Si-H compound is allowed to stand for an extended length of time or is exposed to moisture, conversion of the Si-H groups into Si-OH groups tends to occur. This conversion of Si-H groups may lead to H₂ gassing, increased viscosity and/or gelation during storage of the composition, bubbling during cure and potentially reduction in cure.

The gassing problem is exacerbated by the addition of fillers which are needed for the cured composition to obtain desired mechanical and physical properties. Since fillers tend to contain some level of moisture, the shelf life of filled Si-H containing addition curable compositions were very limited due to gassing. The inventors have discovered that the addition of a molecular sieve dessicant to filled Si-H containing addition curable compositions reduces the gassing so the compositions are shelf stable.

In this invention, an addition curable composition is prepared having reduced gassing in the presence of a Si-H containing crosslinker and a filler. Also prepared is a base portion of an addition curable composition having reduced gassing in the presence of an Si-H containing crosslinker and a filler.

This invention relates to an addition curable composition comprising:
(A) 100 parts by weight of an organic polymer having on average at least 1.4 alkenyl groups per molecule;
(B) an amount sufficient to cure the composition of a crosslinker having on average at least 1.4 hydrosilyl groups per molecule;
(C) a platinum group metal containing catalyst in an amount sufficient to effect curing of the composition;
(D) a molecular sieve dessicant in an amount sufficient to reduce gassing in the composition; and
(E) 3 to 400 parts by weight of a filler.

Component (A) is an organic polymer having on average at least 1.4 alkenyl groups per molecule. The organic polymer may be linear or branched and may be a homopolymer, copolymer or terpolymer. The organic polymer may also be present as a mixture of different organic polymers so long as there is on average at least 1.4 alkenyl groups per polymer molecule. Specific examples of the polymer chain include a polyether such as polyoxyethylene, polyoxypropylene, polyoxytetramethylene, polyoxyethylene-polyoxypropylene; a polyester prepared by a condensation of a dibasic acid such as adipic acid and a glycol or by a ring-opening polymerization of lactones; ethylene-propylene copolymer; a polybutylene such as polyisobutylene; a copolymer of isobutylene with isoprene or the like; polychloroprene; polyisoprene; a copolymer of isoprene with butadiene, acrylonitrile, styrene or the like; polybutadiene; a copolymer of butadiene with styrene, acrylonitrile or the like; and a polyolefin prepared by hydrogenating polyisoprene, polybutadiene, or a copolymer of isoprene or butadiene with acrylonitrile and styrene.

The preferred organic polymer comprises a homopolymer or a copolymer selected from a polyether, a polyester, a polybutylene where the polybutylene chain may comprise repeat units having the following formulas 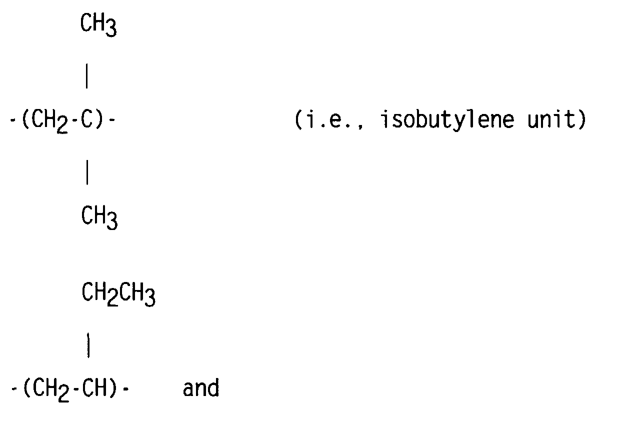 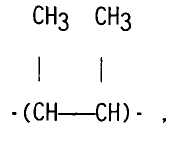 as well as rearranged products such as

-(CH₂CH₂CH₂CH₂)-

and 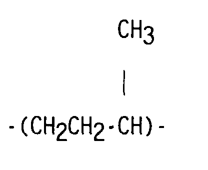 a polyisoprene, a polybutadiene a copolymer of isobutylene and isoprene, a copolymer of isoprene and butadiene, a copolymer of isoprene and styrene, a copolymer of butadiene and styrene, a copolymer of isoprene, butadiene and styrene and a polyolefin polymer prepared by hydrogenating polyisoprene, polybutadiene or a copolymer of isoprene and styrene, a copolymer of butadiene and styrene or a copolymer of isoprene, butadiene and styrene.

It is more preferred that the organic polymer comprises a homopolymer or copolymer wherein at least 50 mole percent of the repeat units are isobutylene units of the following structure: 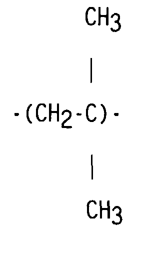 One or more hydrocarbon monomers, such as isomers of butylene, styrene, derivatives of styrene, isoprene and butadiene may be copolymerized with the isobutylene, the preferred co-monomer being selected from 1-butene, α-methylstyrene and isoprene. It is even more preferred that the organic polymer comprise at least 80 mole percent of the isobutylene repeat units described above. Most preferably, the organic polymer, other than the alkenyl groups, is a homopolymer consisting essentially of isobutylene repeat units.

The alkenyl groups of the organic polymer are not limited and include, for example, vinyl, allyl, 1-hexenyl and decadecenyl, preferably allyl. In preferred embodiments, a group X may bond the alkenyl group to the main chain of the organic polymer, as described by formula: 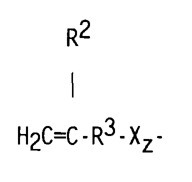 wherein R² is a hydrogen atom or a methyl radical, R³ is a divalent hydrocarbon radical having 1 to 18 carbon atoms and z is 0 or 1. The group X bonds with R³ of the alkenyl group through a group other than carbon, forming an ether, ester, carbonate, amide, urethane or siloxane linkage, preferably an ether linkage, to the main chain of the organic polymer.

The alkenyl groups may be found pendant along the polymer chain or at the chain ends, with it being preferable for the alkenyl groups to be at the chain ends. It is most preferred that the majority of the organic polymer molecules have an alkenyl group at each chain end.

While there must be on average at least 1.4 alkenyl groups per organic polymer molecule, it is preferred that each polymer molecule have on average 1.8 to 8 alkenyl groups with 1.8 to 4 alkenyl groups on average per molecule being more preferred.

The alkenyl group may be introduced into the organic polymer by known methods. Typically, the alkenyl groups may be introduced after polymerization or during polymerization.

The method for introducing the alkenyl group after the polymerization includes, for example, reacting an organic polymer having a functional group such as hydroxyl group or alkoxide group at the chain end, in the main chain or in the side chain, with an organic compound having an alkenyl group and an active group which is reactive to said functional group so as to introduce the alkenyl group onto the polymer chain at that point. Specific examples of the organic compound having the alkenyl group and the active group which is reactive to said functional group are a C₃-C₂₀ unsaturated aliphatic acid, acid halide and acid anhydride such as acrylic acid, methacrylic acid, vinyl acetate, acrylic chloride and acrylic bromide; a C₃-C₂₀ unsaturated aliphatic acid substituted halide such as allyl chloroformate (CH₂CHCH₂OCOCl) and allyl bromoformate (CH₂CHCH₂OCOBr); allyl chloride, allyl bromide, vinyl(chloromethyl)benzene, allyl(chloromethyl)benzene, allyl(bromomethyl)benzene, allyl chloromethyl ether, allyl(chloromethoxy)benzene. 1-butenyl chloromethyl ether, 1-hexenyl(chloromethoxy)benzene, allyloxy(chloromethyl)-benzene and isocyanate functional C₃-C₂₀ unsaturated aliphatic organic compounds or isocyanate functional silanes having alkenyl groups, such as Vi(CH₃)₂ Si(CH₂)₃NCO where Vi is vinyl.

The method for introducing the alkenyl group during the polymerization includes, for example, introducing the alkenyl group into the main chain or at the chain end of the polymer by using a vinyl monomer which has an alkenyl group having a low radical reactivity in the molecule such as allyl methacrylate and allyl acrylate or a radical chain transfer agent which has an alkenyl group having a low radical reactivity such as allyl mercaptan when the organic polymer is prepared by a radical polymerization.

The bonding manner of the alkenyl group to the main chain of the organic polymer is not limited. The alkenyl group may directly bond to the main chain of the organic polymer by a carbon-carbon linkage, or it may bond to the main chain of the organic polymer through an ether, ester, carbonate, amide, urethane or siloxane linkage.

The butylene polymers useful herein may be prepared by methods known in the art, such as described in U.S. Patent No. 4,758,631. One telechelic butylene polymer, for example, is available from Kaneka Company (Japan) under the tradename EPION™.

The number average molecular weight of the organic polymer may be from 500 to 300,000, preferably from 5000 to 20,000 and most preferably from 8000 to 15,000.

The present composition requires the presence of an amount sufficient to cure the composition of a crosslinker having on average at least 1.4 hydrosilyl (Si-H) groups per molecule (Component (B)). Although the crosslinker must contain on average at least 1.4 hydrosilyl groups per molecule and no more than one silicon-bonded hydrogen atom per silicon atom, there is no other restriction on the crosslinker. For example, the crosslinker may be an organic molecule containing the required hydrosilyl groups as described in U.S. Patent No. 5,409,995. Preferably, the crosslinker is an organo-hydrogensilane or organohydrogensiloxane where the remaining valences of the silicon-bonded hydrogen atoms are satisfied for example by oxygen atoms or monovalent hydrocarbon radicals comprising one to seven carbon atoms.

The monovalent hydrocarbons radicals can be, for example, alkyls such as methyl, ethyl, propyl, tertiary butyl and hexyl; cycloalkyls such as cyclohexyl; aryls such as phenyl and tolyl; and halogen substituted alkyls such as 3,3,3-trifluoropropyl and perfluoropropyl. Preferred is when all of the monovalent hydrocarbon radicals are methyl.

Organohydrogensiloxanes are more preferred as the crosslinker and examples of organohydrogensiloxanes useful as crosslinkers in the present composition are described in U.S. Patent No. 3,989,668; U.S. Patent No. 4,753,978 and U.S. Patent No. 5,409,995. The organohydrogensiloxane crosslinker can be a homopolymer, a copolymer or mixtures thereof, containing for example, diorganosiloxy units, organohydrogensiloxy units, triorganosiloxy units and SiO₂ units. The organohydrogensiloxane crosslinker can be linear, cyclic and branched polymers and copolymers. It is preferred to add both a cyclic organohydrogensiloxane and a linear organohydrogensiloxane.

The most preferred crosslinkers are selected from methylhydrogen siloxane cyclics [MeHSiO]ₛ where s is from 4 to 10 and methylhydrogen siloxane linears (Me)₃SiO((Me)(H)SiO)ₘ((Me)₂SiO)ₙSi(Me)₃ where m is from 3 to 10, more preferably 5, and n is from 1 to 5, more preferably 3, in each case where Me is methyl.

The amount of crosslinker useful in the present composition is that sufficient to cure the composition. Generally, a useful amount of crosslinker is that amount sufficient to provide a molar ratio of hydrosilyl groups to alkenyl groups of the organic polymer within a range of 0.65:10 to 10:1. Preferred is where the molar ratio of hydrosilyl groups of the crosslinker to alkenyl groups of the organic polymer is within a range of about 1:1 to 5:1. More preferred is where the molar ratio of hydrosilyl groups of the crosslinker to alkenyl groups of the organic polymer is within a range of about 1:1 to 2.2:1.

The crosslinker may be added as a single species or as a mixture of two or more different species. It is preferred to add the crosslinker as a mixture of two or more species.

A platinum group metal-containing catalyst (Component (C)) is used in the curable composition in an amount sufficient to promote curing of the composition. The platinum group metal-containing catalyst can be any such catalyst which is known to catalyze hydrosilation reactions. By "platinum group metal", it is meant ruthenium, rhodium, palladium, osmium, iridium and platinum. A group of platinum group metal-containing catalysts particularly useful in the present composition are the platinum complexes prepared as described in U.S. Patent No. 3,419,593 and U.S. Patent No. 5,175,325. Preferred catalysts are solutions containing complexes of platinum with vinylsiloxane. Other examples of useful platinum group metal-containing catalyst can be found in U.S. Patent No. 3,989,668; U.S. Patent No. 5,036,117; U.S. Patent No. 3,159,601; U.S. Patent No. 3,220,972; U.S. Patent No. 3,296,291; U.S. Patent No. 3,516,946; U.S. Patent No. 3,814,730 and U.S. Patent No. 3,928,629.

The amount of platinum group metal-containing catalyst useful in effecting curing of the present composition is not narrowly limited as long as there is a sufficient amount present to accelerate a reaction between the hydrosilyl groups and the alkenyl groups. The appropriate amount of the platinum group metal-containing catalyst will depend upon the particular catalyst used. In general as low as about 0.1 parts by weight of platinum group metal based on 1 million parts by weight of organic polymer may be useful (ie. 0.1 ppm). Preferably, the amount of platinum group metal is at least 5 ppm. More preferred is from 10 ppm to 200 ppm of platinum group metal.

The platinum group metal-containing catalyst may be added as a single species or as a mixture of two or more different species. Adding the catalyst as a single species is preferred.

Component (D) comprises a molecular sieve dessicant. These molecular sieve dessicants are crystalline metal alumino-silicates characterized by rigid three dimensional structures containing cavities or pores which are connected to one another by channels. These pores or cavities are capable of selectively adsorbing molecules of narrow size range. The molecular sieves dessicants useful herein may be powders, beads, mesh or pellets. Powders are preferred. The nominal pore size of the molecular sieve dessicant is preferably 10 angstroms or less. More preferably, the nominal pore size is 3 to 10 angstroms with 3 to 5 angstroms being most preferred. Since the molecular sieve dessicant is added to absorb any moisture in the addition curable composition, such as in the filler and to adsorb any H₂ or other gas which may be formed if the Si-H groups react with moisture or other reactants, it is preferred to pre-dry the molecular sieves before use. This is typically done by heating the molecular sieves at 80 to 120^{o}C. for 12 to 48 hours, preferably under vacuum. Depending on the ingredients of the composition and the potential compounds to be adsorbed, one may add molecular sieves having different pore sizes.

Generally, the amount of molecular sieve dessicant used should be that amount which provides reduced gassing and increased shelf life for the curable composition and is dependent on the specific ingredients used. For example, if one uses a filler having more moisture in the composition, more of the dessicant may be required due to the added moisture to the system. Typically, one would use 10 parts molecular sieve dessicant to remove 1 part water. An amount from 1 to 10 parts by weight molecular sieve dessicant based on 100 parts by weight filler should be sufficient. Preferably, the dessicant is added in an amount from 3 to 5 parts by weight based on 100 parts by weight filler.

For the cured composition to achieve desired properties, a filler (Component E) is added to the addition curable composition. These fillers can be those generally used in formulating seal ants, adhesives or coatings and include both reinforcing fillers and non-reinforcing or extending fillers.

Reinforcing fillers include any finely divided form of silica which can be prepared by precipitation or a fume process and may be treated or not. Treated or untreated precipitated calcium carbonate having a particle size less than 1 micrometer can be used as a reinforcing filler. Carbon black, especially acetylene black with a low sulfur content are also useful as a reinforcing filler in this invention. Non-reinforcing or extending fillers include glass spheres, wollastonite, diatomaceous earths, clay or talc and finely ground particles of oxides or hydroxides or carbonates of silicon, calcium, magnesium, barium, or zinc.

Preferred fillers are ground and precipitated calcium carbonate, fumed silica, carbon black and talc. More preferred fillers are ground and precipitated calcium carbonate, fumed silica and carbon black, with ground and precipitated calcium carbonate being most preferred.

Just as the type of filler is at least in part determined by the physical properties desired in the cured composition, so is the amount of filler added. Generally, the filler may be added in an amount from 3 to 400 parts by weight based on 100 parts by weight organic polymer. Preferably, the filler is added in an amount from 10 to 150 parts by weight, on the same basis. More preferably, the filler is added in an amount from 30 to 100 parts by weight, on the same basis.

The present composition may cure rapidly at room temperature. To hinder this curing process an inhibitor may be added to the composition. The inhibitor can be any of those materials known to inhibit the catalytic activity of platinum group metal-containing catalyst. By the term "inhibitor", it is meant a material that retards the room temperature curing of the composition when incorporated in the composition at less than 10 weight percent of the composition, without preventing the elevated temperature curing of the composition.

Inhibitors for platinum group metal-containing catalysts are well known in the art. A preferred class of inhibitors useful in the present composition are acetylenic alcohols as described in U.S. Patent No. 3,445,420. Such acetylenic alcohols are exemplified by ethynyl cyclohexanol and methylbutynol. Other examples of classes of inhibitors which may be useful in the present composition are described in U.S. Patent No. 5,036,117.

The amount of inhibitor useful in the present composition is not known to be critical and can be any amount that will retard the reaction of the hydrosilyl groups with the alkenyl groups, while not preventing the reaction at elevated temperatures. The specific amount of inhibitor to be used will depend upon the particular inhibitor used, the concentration and type of catalyst and the nature and amounts of organic polymer and crosslinker. Generally, when an inhibitor is used it is preferred that at least one mole of inhibitor be present for each mole of platinum group metal in the composition and that the inhibitor not exceed one weight percent of the composition.

In addition to the above ingredients, the composition may include additives which impart or enhance certain properties of the cured composition or facilitate processing of the curable composition. Typical additives include adhesion promoters, plasticizers, functional and non-functional diluents, pigments, dyes and heat and/or ultraviolet light stabilizers. The effect of any such additives should be evaluated as to their result and impact on other properties of the composition.

The inventors have determined that the addition of a molecular sieve dessicant reduces gassing and increases the shelf stability of Si-H containing addition curable compositions. Although not wanting to be limited to any particular theory, the inventors believe that the molecular sieves reduce gassing and increases the shelf stability of the composition by reducing the amount of moisture present in the composition. This reduced moisture decreases the side reactions that may take place which lead to gassing and reduced shelf stability.

The addition curable composition of this invention may be prepared by mixing all the ingredients together. When all of the ingredients are mixed together, the composition will begin to cure unless a cure inhibitor is present. If the composition is not to be used immediately after mixing, it should be prepared in at least two parts. Separating the organic polymer, Si-H containing crosslinker, the filler and the molecular sieve dessicant in one part which can be referred to as a "base portion" and having the catalyst in another part, the individual parts will be shelf stable. If alkoxysilanes are added as adhesion promoters, it is preferred that they are included in the base portion. This will result in a two package composition where the two parts are shelf stable and will not cure until they are mixed together. Without the addition of the molecular sieve dessicant, the base portion gasses and has reduced shelf stability. At the time of application, the contents of the two parts are mixed together and curing occurs.

The following examples are presented for illustrative purposes and should not be construed as limiting the present invention which is delineated in the claims.

### Example 1

53.25 g Epion Polymer™, an allyl ended functional polyisobutylene having a number average molecular weight (Mn) of 10000 and an alkenyl functionality of approximately 1.7 manufactured by Kaneka Corporation (Allyl PIB) and 53.25 g Panalane L-14e™, a low molecular weight polybutene polymer having a viscosity < 320 cs manufactured by Amoco Chemical Company (PB polymer) were mixed under vacuum for approximately 15 min to remove air. 99 g CS-11™, a surface treated ground calcium carbonate filler manufactured by Georgia Marble (GCC) and 99 g Winnofil SPM™, a surface treated precipitated calcium carbonate filler manufactured by ICI (PCC) were added and mixed at 20 rpm until the filler was dispersed in the polymer and no longer powdery and then mixing was increased to 65 rpm under vacuum for 10 min. Next, 1.22 g tetraethylorthosilicate (TEOS), 0.63 g 3-glycidoxypropyltrimethoxysilane (GOPTMS) and 1.91 g of a SiH crosslinker composed of mainly methylhydrogensiloxane cyclic tetramer and pentamer, %H as SiH = 1.487 ((MeHSiO) cyclics) giving a SiH:alkenyl ratio of approximately 3.1 were added and mixed into the base material in a semkit mixer for approximately 6 minutes. The mixture was then transferred to a cartridge, centrifuged to force out any air in the cartridge and left overnight at 23 ± 2^{o}C, 55 ± 5% relative humidity. Upon inspection, gassing had occurred, pushing the end plug out of the cartridge.

### Example 2

Two samples were prepared as described in Example 1 using 51 g of Allyl PIB, 50 g PB Polymer, 50 g GCC, 50 g PCC and 1.8 g (MeHSiO) cyclics giving an SiH:alkenyl ratio of approximately 3.1. 100 g of this material was transferred to a Semco tube (Sample 2-1) and another 100 g was combined with 0.25 g TEOS and 0.55 g GOPTMS to give Sample 2-2. Both of these samples were extruded into head space analysis vials and capped. They were allowed to sit overnight at 23 ± 2^{o}C., 55 ± 5% relative humidity and then analyzed by room temperature headspace analysis using electron ionization GC mass spectroscopy. Analysis of Sample 2-1 (not containing alkoxysilanes) detected high amounts of water and hydrogen and analysis of Sample 2-2 (containing alkoxysilanes) detected water, hydrogen and various alcohols. This indicates that the SiH containing materials are reacting with water and/or the alkoxysilanes to form these materials.

### Example 3

(A) Various tests were run to examine the cause of gassing in the portion of the formulation containing the SiH containing crosslinker. These samples were prepared as in Example 1, with the addition and subtraction of certain components as noted in Table 1 and allowed to sit at 23 ± 2^{o}C., 55 ± 5% relative humidity. All amounts provided in Table 1 are in grams. Sample 3-4 shows the effect of adding molecular sieves, in that case, 8.04 g 5 Angstrom Molecular Sieves (5A), absorbent sieves having an average cavity size of 5 Angstroms manufactured by Advanced Specialty Gas Equipment was added.

**TABLE 1**

| Sample | Allyl PIB | PB Polymer | Fillers | | (MeHSiO) Cyclics | SiH/Alkenyl | TEOS | GOPTMS | Mol. Sieves | Gassing |
|---|---|---|---|---|---|---|---|---|---|---|
| | | | PCC | GCC | | | | | | |
| | | | | | | | | | | |
| 3-1 | 163.3 | - | 157 | 161 | - | - | - | - | - | no |
| 3-2 | 100.7 | 100.1 | 100 | 100.1 | 3.72 | 3.2 | 2.2 | 1.0 | - | yes |
| 3-3 | 101.6 | 101.3 | 100.3* | 100.8* | 3.6 | 3.1 | 2.2 | 1.0 | - | yes |
| 3-4 | 101.3 | 101 | 100 | 100 | 3.6 | 3.1 | 2.2 | 1.0 | 8.04 | no |
| 3-5 | 101.1 | 101.5 | - | - | 4.2 | 3.6 | - | - | - | no |
| 3-6 | 51.0 | 51.0 | - | - | 3.6 | 6.2 | 2.2 | 1.0 | - | very little |

| | | | | | | | | | | |
|---|---|---|---|---|---|---|---|---|---|---|
| *filler was dried at 100C in an oven overnight. | | | | | | | | | | |

Sample 3-1 did not show any signs of gassing after 8 days indicating no interaction between Allyl PIB and fillers. Sample 3-5 did not show any signs of gassing after 5 days indicating no interaction between Allyl PIB, PB Polymer and the (MeHSiO) cyclics. Sample 3-6 did show a very small amount of gassing after 8 days, indicating that the alkoxy silanes are involved with the gassing problem. Sample 3-4 included adding molecular sieves to the formulation and did not gas even after 6 months on the shelf. The filler seems to play the biggest role in the gassing problem, however, the alkoxysilanes do play a role as well.
(B) To ensure that only the SiH containing part of the formulation was gassing, an experiment was run studying the platinum containing portion of the formulation. 50 g Allyl PIB and 50 g PB Polymer were mixed under vacuum for approximately 15 minutes to remove air from the mixture. 100 g GCC and 100 g PCC were added and mixed at 20 rpm until the filler was dispersed in the polymer and no longer powdery and then mixing was increased to 65 rpm under vacuum for 10 min. Next, 0.13 g of a solution of a platinum vinylsiloxane complex having a platinum concentration of 0.5% by weight (13 parts platinum based on one million parts Allyl PIB, ie. ppm) and 0.03 g Tyzor™ TBT, a tetrabutyltitanate manufactured by Dupont was added and mixed into the base material in a Semkit mixer for approximately 6 min. The mixture was then transferred to a cartridge, centrifuged to force out any air in the cartridge and allowed to sit at 23 ± 2^{o}C., 55 ± 5% relative humidity. This platinum containing portion of the formulation did not show any signs of gassing even after 20 days.

### Example 4

(A) A large masterbatch of unfilled base material was prepared by a simple mixing of equal parts by weight of the Allyl PIB polymer and PB Polymer (2028 g of each) using a two gallon Ross mixer.
(B) A large masterbatch of filled base material was also prepared. This filled base material was prepared by first adding 1206 g PB Polymer to a 2 gallon Ross mixer and then adding 1206 g Winnofil SPM™ treated precipitated calcium carbonate and then 602 g CS-11 treated ground calcium carbonate. Once a smooth paste material was obtained 1206 g Allyl PIB polymer was added and mixed at 40-60 rpm till a sealant like material is obtained.

Incorporation of other ingredients such as SiH crosslinker, molecular sieves, etc. were added, as described in Table 2 below, to 50 g of the unfilled base prepared in Example 4 (A) and 50 g of the filled base prepared in Example 4 (B) using a Whip mixer (dental mixer). Two, 30 sec mixing cycles were generally sufficient to incorporate the ingredients. The materials were then placed in cartridges. After filling, the cartridges were centrifuged for 20 min. See Table 2 for formulations.

**TABLE 2**

| SAMPLES | | | | |
|---|---|---|---|---|
| INGREDIENTS (g) | 4-1 | 4-2 | 4-3 | 4-4 |
| Ex. 4 (B) filled base | 50 | 50 | - | - |
| Ex. 4 (A) unfilled base | - | - | 50 | 50 |
| ViSi(OMe)3 | 0.5 | - | 0.5 | - |
| TEOS Si(OEt)4 | 0.55 | - | 0.55 | - |
| GOPTMS | 0.325 | - | 0.325 | - |
| SiH crosslinker A* | 0.35 | 0.35 | 0.56 | 0.56 |
| SiH crosslinker B** | 0.175 | 0.175 | 0.29 | 0.29 |

| | | | | |
|---|---|---|---|---|
| * Me₃SiO(MeHSiO)₅(Me₂SiO)₃SiMe₃ (%H as SiH = 0.76) | | | | |
| **(MeHSiO) cyclics | | | | |
| * Crosslinkers A and B together give SiH/alkenyl PIB = 2 | | | | |

After shelf aging overnight at 23 ± 2^{o}C., 55 ± 5% relative humidity, the formulations were observed for gassing. Samples 4-1 and 4-2, which were filled, gassed significantly after 16 hr shelf aging. The unfilled samples 4-3 and 4-4 did not gas after more than 2 weeks of shelf aging.

### Example 5

In this experiment various fillers were mixed with the unfilled base polymer prepared in Example 4 (A) as well as other ingredients as described in Table 3 below. The samples were prepared by adding a specified amount of unfilled base polymer from Example 4 (A) and a filler to the Whip Mixer (dental mixer) and incorporating the filler in 1 to 2 30 sec mixing cycles. Crosslinker was then added in 1 to 2 30 sec mixing cycles and the entire material placed in cartridges. After filling, the cartridges were centrifuged for 20 min. The cartridges were then placed on the laboratory bench for shelf aging at 23 ± 2^{o}C., 55 ± 5% relative humidity. After centrifuging, a fine point permanent marker was used to carefully mark the position of the plunger within the seal ant cartridges. Evolution of gas was noted by visual inspection of the Semco cartridges following various times of aging and observing any voids developing and change in plunger position from the original position. The total amount of gas evolution was determined by using a 6 inch plastic ruler to carefully measure the distance traveled (in millimeters) by the plunger from its initial premarked position. This distance traveled was recorded as the total amount of gas evolved during storage. See Table 3 for the formulations and gassing results.

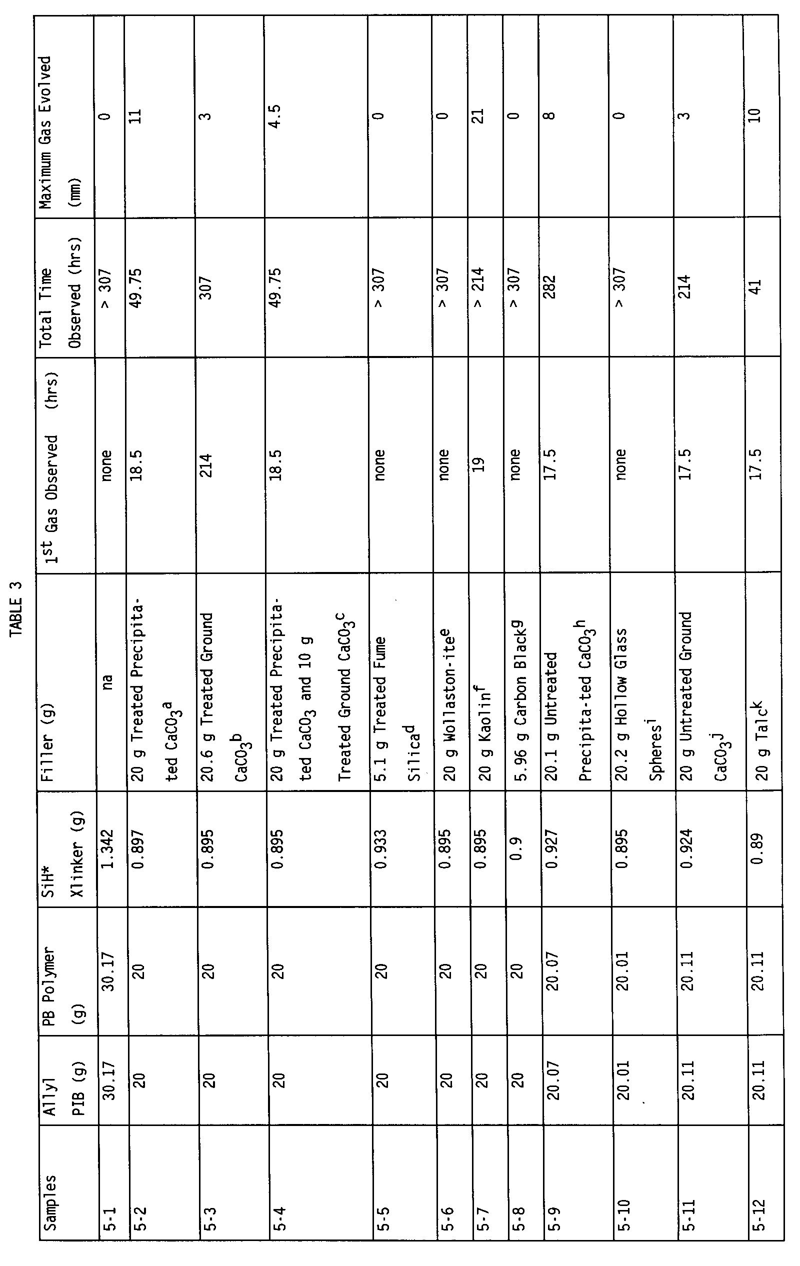

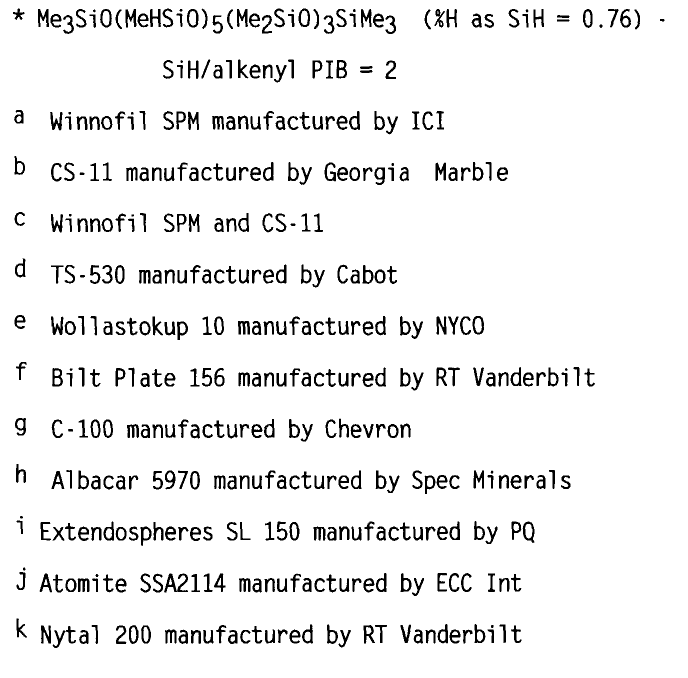

### Example 6

A number of samples were prepared as described in Table 4 (Formulations 6-2 through 6-4) examining different methods to try to prevent gassing including adding molecular sieves and using vinyltrimethoxysilane ViSi(OMe)₃ (VTM) as a chemical drier. These samples were prepared by mixing 50 g of the filled base prepared by the method of Example 4 (B) with the other ingredients listed in a Whip Mixer (dental mixer) for 2 cycles of 30 sec each under 50.8 cm vacuum at 425 rpm. The entire material was then placed in cartridges. After filling, the cartridges were centrifuged for 20 minutes. The cartridges were then placed on the laboratory bench for shelf aging at 23 ± 2^{o}C., 55 ± 5% relative humidity and measurement of gassing in accordance with the method described in Example 5.

**TABLE 4**

| Sample | Filled Base Polymer from Ex. 4(B) (g) | SiH* Crosslinker (g) | Molecular Sieves 5A (as received) (g) | Molecular Sieves 5A (dried) (g) | VTM (g) |
|---|---|---|---|---|---|
| 6-1 | 50 | 0.65 | 0 | 0 | 0 |
| 6-2 | 50 | 0.64 | 0 | 1.54 | 0 |
| 6-3 | 50 | 0.64 | 1.56 | 0 | 0 |
| 6-4 | 50 | 0.65 | 0 | 0 | 1.04 |
| 6-5 | 50 | 0.63 | 0 | 1.6 | 1.02 |

| | | | | | |
|---|---|---|---|---|---|
| *Me₃SiO(MeHSiO)₅(Me₂SiO)₃SiMe₃ (%H as SiH = 0.76) - SiH/alkenyl PIB = 2 | | | | | |

See Table 5 for the gassing results. Sample 6-1 was the control. Samples 6-2 and 6-3 evaluated the effect of adding molecular sieves (5A from Advanced Specialty Gas). The sieves were used as received and also dried (16 hours at 150°C.). The cartridge containing the predried sieves (sample 6-2) did not gas with the presence of the crosslinker, while sample 6-3 which used the sieves as received gassed. It is believed, this gassing was caused because the sieves absorbed moisture during storage since the can was stored for several months and had been opened many times during that time period.

Using VTM as a chemical drier decreased gassing as sample 6-4 containing 2 parts VTM gassed significantly less than the control sample 6-1. The use of VTM and sieves in sample 6-5 did not reduce gassing over the samples which contain just the molecular sieves.

A separate sample (sample 6-6) was also prepared with 50 g filled base from Example 4(B) and 0.66 g Me₃SiO(MeHSiO)₅(Me₂SiO)₃SiMe₃ (%H as SiH = 0.76) - SiH/alkenyl PIB ratio of 2 , using the same method as described above except 0.254 g water was also added. The addition of water in this sample increased the rate of gassing as shown by comparison with the control sample 6-1. In less then 68 hrours, the amount of gassing of sample 6-6 is 6 times that of sample 6-1. Final analysis of gas evolution after 476 hrs of samples 6-1 and 6-6 exhibit similar total gas evolution.

**TABLE 5**

| Gas Evolved (mm) from Samples | | | | | | |
|---|---|---|---|---|---|---|
| Hours | 6-1 | 6-2 | 6-3 | 6-4 | 6-5 | 6-6 |
| 0.66 | 0 | 0 | 0 | 0 | 0 | 2 |
| 2 | 3 | 0 | 2 | 0 | 0 | 2 |
| 68 | 3 | 0 | 1 | 2 | 0 | 20 |
| 92 | 3 | 1 | 2 | 4 | 0 | 20 |
| 143 | 4 | 0 | 2.5 | 6 | 0 | 22 |
| 236 | 3 | 0 | 0 | 10 | 1 | 21 |
| 476 | 20 | 0 | 2 | 13 | 2 | 22 |

### Example 7

A large quantity of base material was prepared as described in Example 1 using 420 g of Allyl PIB, 420 g PB Polymer, 420 g PCC, 210 g GCC and 30 g 5A Molecular Sieves (Base Material). The Base Material was extruded into semco tubes each with approximately 140 g of material and let sit at 23 ± 2°C., 55 ± 5% relative humidity. Various levels of Me₃SiO(MeHSiO)₅(Me₂SiO)₃SiMe₃ (%H as SiH = 0.76) crosslinker were added to each of the tubes via a semkit mixer. The samples did not gas in the cartridges within the 24 hour time period before they were used.

**Table 6**

| Samples | SiH/alkenyl | Base Wt(g) | SiH Crosslinker(g) |
|---|---|---|---|
| 7-1 | 6.4 | 166.65 | 6.683 |
| 7-2 | 6.4 | 143.25 | 5.744 |
| 7-3 | 4.8 | 131.29 | 3.949 |

### Example 8

A large batch of base material was prepared as described in Example 1 using 1000 g Allyl PIB, 1000 g PB Polymer, 1000 g PCC and 500 g GCC (Base Material). This material was used in a 2 part system to determine the effects of molecular sieve useage on cure. Sample 1, without molecular sieves, was prepared with 50 g Base and 1.2 g of a platinum vinylsiloxane complex (84ppm Pt) in Part A and 50 g Base Material and 1.0 g Me₃SiO(MeHSiO)₅(Me₂SiO)₃SiMe₃ (%H as SiH = 0.76) (1.6 SiH/alkenyl) in Part B. Sample 2 was prepared the same as Sample 1 with the exception of 1.3 g 5A molecular sieves added to Part B. On the same day of preparation, samples were extruded from the 2 part system, through a static mixer and allowed to cure at room temperature 23 ± 2^{o}C., 55 ± 5% relative humidity and elevated temperature (80^{o}C.). Both samples cured at 5 minutes 30 seconds at 80^{o}C. and 4 hours at room temperature. The samples were then allowed to sit overnight in the semco tubes. It was noted Sample 1 (without molecular sieves) had gassed in the tube overnight, while Sample 2 (with molecular sieves did not). The samples were extruded out once again and checked for cure. Sample 1 cured at 80^{o}C. in just over 30 minutes and did not appear to cure at room temperature in 19 hours. Sample 2 cured in 4 minutes at 80 ^{o}C. and 4 hours at room temperature.

## Claims

1. An addition curable composition comprising:
(A) 100 parts by weight of an organic polymer having on average at least 1.4 alkenyl groups per molecule;
(B) an amount sufficient to cure the composition of a crosslinker having on average at least 1.4 hydrosilyl groups per molecule;
(C) a platinum group metal containing catalyst in an amount sufficient to effect curing of the composition;
(D) a molecular sieve dessicant in an amount sufficient to reduce gassing in the composition; and
(E) 3 to 400, preferably 10 to 150, more preferred 30 to 100 parts by weight of a filler based on 100 parts by weight of the organic polymer (A).

2. The addition curable composition of Claim 1 wherein the organic polymer has on average 1.8 to 8 alkenyl groups per molecule and is selected from polyether a polyester, a polybutylene, a polyisoprene, a polybutadiene, a copolymer of isobutylene and isoprene, a copolymer of isoprene and butadiene, a copolymer of isoprene and styrene, a copolymer of butadiene and styrene, a copolymer of isoprene, butadiene and styrene and a polyolefin polymer prepared by hydrogenating polyisoprene, polybutadiene or a copolymer of isoprene and styrene, a copolymer of butadiene and styrene or a copolymer of isoprene, butadiene and styrene.

3. The addition curable composition of Claim 2 wherein at least 50 mole percent of the repeat units of the organic polymer are isobutylene units.

4. The addition curable composition of any of claims 1-3 wherein the amount of the crosslinker added to the composition provides a ratio of hydrosilyl groups to alkenyl groups of the organic polymer within a range of 1:1 to 2.2:1.

5. The addition curable composition of any of claims 1-4 wherein the crosslinker is selected from methylhydrogensiloxane cyclics [(Me)(H)SiO]ₛ where s is from 4 to 10 and methyl-hydrogen siloxane linears (Me)₃SiO((Me)(H)SiO)ₘ((Me)₂SiO)ₙSi(Me)₃ where m is from 3 to 10 and n is from 1 to 5, in each case where Me is methyl.

6. The addition curable composition of any of claims 1-5 wherein the amount of the molecular sieve dessicant is 1 to 10, preferably 3 to 5 parts by weight based on 100 parts by weight of the filler.

7. The addition curable composition of any of claims 1-6 wherein the molecular sieve dessicant has a pore size of 10 angstroms or less, preferably a pore size from 3 to 5 Angstroms.

8. The addition curable composition of any of claims 1-7 wherein filler is selected from ground and precipitated calcium carbonate, fumed silica, carbon black and talc.

9. The addition curable composition of any of claims 1-8 and further comprising an inhibitor.

10. A base portion of an addition curable composition comprising:
(A) 100 parts by weight of an organic polymer having on average at least 1.4 alkenyl groups per molecule;
(B) an amount sufficient to cure the composition of a crosslinker having on average at least 1.4 hydrosilyl groups per molecule;
(D) a molecular sieve dessicant in an amount sufficient to reduce gassing in the composition; and
(E) 3 to 400 parts by weight of a filler.

11. The base portion of claim 10 wherein the product comprises from 3 to 5 parts by weight molecular sieve dessicant, having a pore size from 3 to 10 Angstroms, based on 100 parts by weight filler and 10 to 150 parts by weight of a filler selected from the group consisting of ground and precipitated calcium carbonate, fumed silica, carbon black and talc.
